# EUROPEAN PATENT SPECIFICATION

(11) **EP 2 928 631 B1**
(45) Date of publication and mention of the grant of the patent: **17.05.2017**
(21) Application number: 13821444.0
(22) Date of filing: 06.12.2013
(51) Int. Cl.: B27B 27/06, B23B 45/00, B23B 45/12, B23B 45/16

(54) **HAND-HELD MITER SAW**
HANDGEHRUNGSSÄGE
SCIE À ONGLETS PORTABLE

(30) Priority: 06.12.2012 DK 201200664
(43) Date of publication of application: 14.10.2015
(73) Proprietor: Silas List Cutter ApS, 2100 København Ø (DK)
(72) Inventor: SAUER, Silas Ohm, DK-2100 København Ø (DK)
(74) Representative: Holme Patent A/S
(86) International application number: PCT/DK2013/050419
(87) International publication number: WO 2014/086376

(56) References cited:
- FR-A1- 2 841 490
- SU-A1- 1 180 185
- US-A- 4 864 730
- US-A- 6 014 810
- US-A1- 2002 088 326
- US-A1- 2010 162 867

## Description

The invention is related to a hand-held miter saw with an electrically powered circular saw blade for in use cutting a rod, said saw comprises a table for supporting the rod and a guideway for aligning the rod into a desired miter angle. Such a miter saw is know from US2010/0162867, which document discloses the features of the preamble of claim 1. The invention is also related to a use of the hand-held miter saw.

The term "hand-held" means here that the miter saw is held solely by the hands of an operator when bearing and cutting a rod or list, and the term "miter angle" means that the cut is forming an angle with the longitudinal direction of said rod. The rod to be cut by means of the miter saw of the invention can have any profile and may consist of any material, for example plastic, wood or metal.

Pieces of rods can be used to many different purpose. By way of example can be mentioned a frame to a window or to a painting assembled of pieces of rods cut in angles of 45°.

The cut need in this case to be exactly 45° to the longitudinal direction of the rod and also perpendicular to the plane of the table for thereby securing that the edges of two adjacent pieces of rods are fitting to each other in the corners of the frame in such way that the frames achieve the nice appearance requested for such frames.

Miter saws for cutting rods into pieces are well known within the art of the present technique.

From the US Patent No. 4,934,233 is thus known a miter saw having a table that can be turned for supporting a rod to be cut by means of a power driven saw blade. The table has a guideway for aligning the rod and can be turned for allowing the rod to be positioned in the desiret angle in relation to the saw blade.

This known miter saw suffers however of the draw back that it is a stationary miter saw which often is placed at a distance from the area in which the rods are stored causing that the operator is using time and has trouble with transporting the rods to be cut from the area of storing of rods up to the miter saw.

The US publication No. 2009/0139382 A1 discloses a portable miter saw, which the operator can bear up to the area where the rods are stored.

Owing to the length of both the rod to be cut and of the cradle assembly for supporting the rod the operator however need to be placed in a cramped position at the side of the miter saw when bearing and operating the miter saw during which the operator need to use both of his/hers hands.

The operator can bear the known miter saw, but during operation the saw is standing with its feet placed upon the ground as seen e.g. on fig. 4 of said publication.

This known miter saw has unfortunately a heavy structure and is moreover cumbersome to operate, especially because the operator needs to tilt the saw blade for being able to cut a rod in miter. In the tilted position of the saw blade is the operator forced to advance the saw blade through the rod by means of a hand being in an awkward position.

The above-mentioned disadvantages of the prior art miter saws are according to the present invention remedied by,
In a first aspect of the invention providing a miter saw of the kind mentioned in the opening paragraph, which can be operated in hand-held position,
in a second aspect of the invention providing a miter saw of the kind mentioned in the opening paragraph, which has a light and inexpensive structure,
in a third aspect of the invention providing a miter saw of the kind mentioned in the opening paragraph, which can be held and be operated by means of only one hand of an operator,
in a fourth aspect of the invention providing a miter saw of the kind mentioned in the opening paragraph, which is easy to operate, and
in a fifth aspect of the invention providing a miter saw of the kind mentioned in the opening paragraph, which can cut a rod in miter when the saw blade is positioned perpendicular to the table supporting the rod.

The novel and unique features according to the invention whereby these aspects are achieved consist in the fact that the hand-held miter saw comprises a bearing with an axis extending parallel with the table and consisting of a piece of tube and a piece of axle pivotally mounted in the tube, a first lever connected to the tube of the bearing and a second lever connected to the axle of the bearing, a cutting head for supporting the spindle of the circular saw blade in such way that the axis of rotation of said spindle is parallel with the axis of the bearing, an arm which is formed on the cutting head and attached to the axle of the bearing or pivotally connected to the first lever, and a bar, which is attached to the tube of the bearing or to the first lever and is supporting the table in such way that the table can turn about a pivot axle of the table so that the guideway forms an angle with the saw blade.

By means of this structure is advantageously obtained that the miter saw of the invention is imparted a light and inexpensive structure and easily can be transported and operated without being supported in other ways than by at least one hand of the operator.

The first and second lever can, according to the invention, form such an angle with each other that the operator can hold both of them with one hand and transport and operate the miter saw solely by means of this hand.

The pivot axle of the table can, according to the invention, be placed at such a distance from the axis of the circular saw blade that the pivot axle is always out of reach of the saw blade for thereby securing an unobstructed operation of the miter saw.

The table can moreover be formed with a V-formed notch whereby the angle of the V can be large enough, according to the invention, to allow the saw blade to pass during cutting a rod.

According to the invention the guideway may comprise two upright pieces of plate placed on the table at each their side of the V-formed notch and in such way that they extend parallel with the axis of the bearing in the zero position of the table, whereby is achieved that the rod to be cut always is correctly aligned in the desired miter angle during operation.

The zero position of the table is where the guideway forms an angle of zero degrees with the axis of rotation of the saw blade.

A slit can, according to the invention, be formed in the bar in such way that the circular saw blade can pass through the bar during the cutting operating.

According to the invention the circular saw blade can be shielded from the operator by a lower safety guard placed on the underside of the bar close to at least one of the edges of the slit in the bar and/or an upper safety guard placed on the cutting head close to at least one side of the circular saw blade.

Thereby is advantageously achieved that the operator securely is guarded against being injured by the teeth of the rotating saw blade when operating the miter saw.

In an expedient embodiment of the invention the first lever can, according to the invention, be equipped with a protruding arm connected to the arm of the cutting head with a first pivot, and that the first toggle lever of a toggle joint simultaneously is connected to the arm of the cutting head with a second pivot placed closer to the cutting head than the first pivot while the second toggle lever of the toggle joint is connected to the axle of the bearing.

By means of this constructing is obtained the advantage that the saw blade in its start position can have such a distance to the underlying table that a rod with a predetermined large thickness can be cut even if the angle between the first and second lever is relatively small and that the saw blade during operation anyhow can be advanced through the rod with a suitable power and rate of motion.

The circular saw blade can according to the invention be rotated by means of an electric motor mounted on the cutting head with its axis of rotation placed parallel with and at a distance from the spindle of the circular saw blade whereby the electric motor advantageously can be supplied with current via an electric circuit in which an electric battery on e.g. the miter saw is inserted.

This arrangement causes the advantage that the miter saw freely can be transported and operated without having the trouble with pulling an electric conduit along with the miter saw.

The circular saw blade is preferable rotated with a relatively large speed of rotation for thereby rapidly being able to cut through even a thick rod. The rotating of the circular saw blade can therefore, according to the invention, advantageously be carried out via a toothed gearing.

For excluding the risk of the operator being injured when operating the miter saw, the saw can, according to the invention, moreover be controlled by means of two switches inserted in the electric circuit whereby operating of the miter saw can take place only when the operator activates one of the switches with one hand and the other one with the other hand.

The electric motor can, according to the invention, moreover be a brake motor, whereby that advantage is obtained that the motor and thereby the rotation of the saw blade stops immediately as soon as at least one of the switches is deactivated. The saw blade therefore is without any danger for the operator when finishing the cutting operation.

The miter saw can be used by performing the following steps:
Adjusting the table into the desired miter angle, holding with one of the hands of an operator the first and second lever and thereby the miter saw, transporting the miter saw to the area where the rod to be cut is located, placing with the other hand the rod along the guideway on the table, activating the first switch with the first hand and the second switch with the other hand, clamping the first and second lever against each other by closing the first hand in a tempo corresponding to the tempo in which the cutting of the rod is to be carried out, deactivating at least one of the switches, opening the first hand, and removing at least one of the two severed pieces of rod with the other hand.

The invention will be explained in greater details below, giving further advantageous features and technical effects and describing exemplary embodiments with reference to the drawing, in which
Fig. 1 is a perspective view of the hand-held miter saw according to the invention,
Fig. 2 is at lateral view of the hand-held miter saw seen from the rear side of this,
Fig. 3 shows in a larger scale a fragment of the central portion of the miter saw, seen from the side, and
Fig. 4 shows the same seen along the line IV - IV in fig. 3.

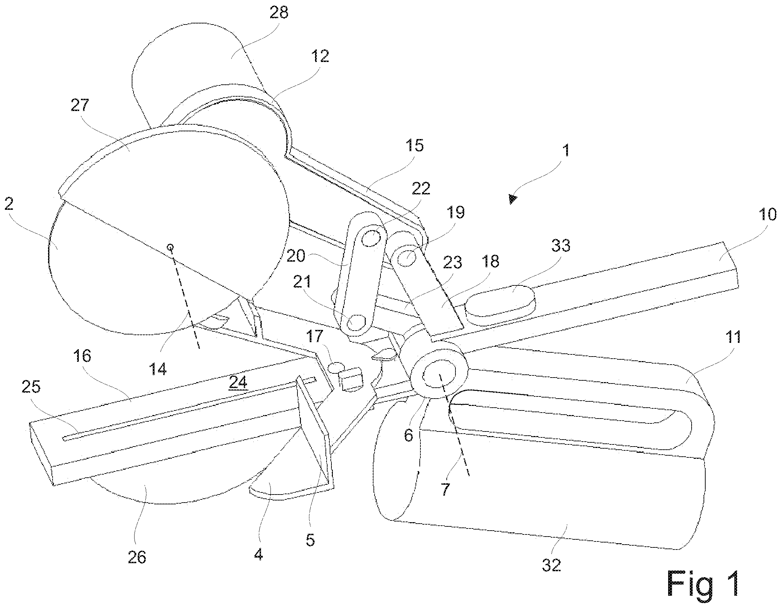

The figures 1 - 4 show a preferred embodiment of a hand-held miter saw 1 of the invention.

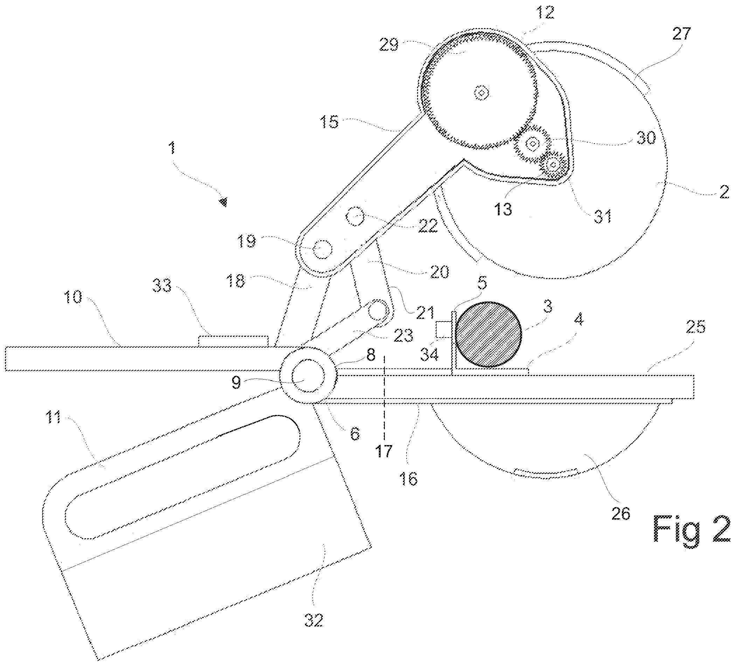

By means of a circular saw blade 2 is the miter saw, as seen in fig.2, adapted to cut a rod 3 placed on a table 4 equipped with a guideway 5 for aligning the rod into a desired miter angle.

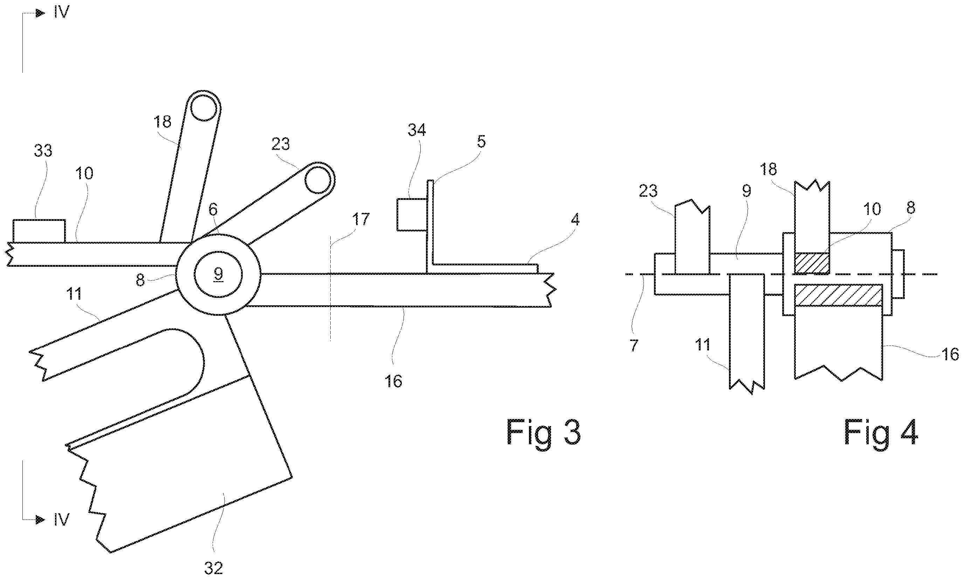

As best seen in figs. 3 and 4 the miter saw comprises a bearing 6 with an axis 7 extending parallel with the table 4. The bearing 6 consists of a piece of tube 8 and a piece of axle 9 pivotally mounted in the tube 8.

A first lever 10 is connected to the tube 8 of the bearing 6 and a second lever 11 is connected to the axle 9 of the bearing 6. Those levers 10, 11 serves like the levers of a tong to operate the miter saw by means of a hand (not shown) of an operator (not shown).

The two levers 10, 11 are forming such an angle with each other that the operator simultaneously can hold both of them by means of one hand.

As seen in figs. 1 and 2 a cutting head 12 serves for supporting the spindle 13 of the saw blade 2, where the axis of rotation 14 of said spindle is parallel with the axis 7 of the bearing 6.

The cutting head 12 is formed with an arm 15, which pivotally is connected to the first lever 10.

A bar 16 which is attached to the tube 8 of the bearing 6 is supporting the table 4 in such way that the table can turn the guideway 5 an angle between minus 75° and plus 75°, more preferably between minus 45° and plus 45°, or most preferably between minus 60° and plus 60° with the axis 14 of rotation of the saw blade 2.

The first lever 10 is equipped with a protruding arm 18 and the arm 15 of the cutting head 12 is moreover connected to that arm 18 by means of a first pivot 19.

A first toggle lever 20 of a toggle joint 21 is simultaneously connected to the arm 15 of the cutting head 12 with another pivot 22 placed closer to the cutting head 12 than the first pivot 19 while the other toggle lever 23 of the toggle joint 21 is connected to the axle 9 of the bearing 6.

Owing to the above-mentioned specific connections between the first lever 10 and the cutting head 12 and thereby the saw blade 2 is an operator (not seen) by using the miter saw of the invention able to cut relatively thick rods 3 with a suitable power and rate of motion.

The table 4 for supporting the rod 3 is mainly formed as a flat plate formed with a V-formed notch 24 large enough to allow the saw blade 2 to pass during a cutting operation in all miter positions of the table 4.

The guideway 5 of the table 4 is simply formed as two upright pieces of plate 5 placed on the table 4 on each their side of the V-formed notch 24.

The bar 16 is formed with a slit 25 for allowing the lower part of the saw blade 2 to pass through the bar during a cutting operation.

For protecting the operator against being injured when operating the miter saw the circular saw blade 2 is shielded from the operator by a lower safety guard 26 placed on the underside of the bar 16 close to at least one of the edges of the slit 25 in the bar 16 and by an upper safety guard 27 placed on the cutting head 12 close to at least one side of the circular saw blade 2.

The circular saw blade 2 is during operation rotated by means of an electric motor 28 mounted on the cutting head 12 in such way that the axis of rotation of the motor is parallel with the axis of the saw blade but placed at a radially distance from the spindle 13 of the circular saw blade 2.

Fig. 2 shows the cutting head 12 seen in section and that a toothed gearing between the motor 28 and the spindle 13 of the saw blade 2 is mounted in the cutting head.

Said gearing comprises a large-toothed wheel 29 on the motor 28, an intermediate toothed wheel 30 and a small-toothed wheel 31 on the spindle 13 of the saw blade 2.

The ratio of gearing thus becomes relatively large causing the saw blade to rotate so fast during a cutting operation that a rod easily and rapidly can be severed into two pieces.

The motor 28 is supplied with current from a battery 32 via an electric circuit, (not seen). The battery is in this case mounted on the underside of the second lever 11.

In the electric circuit is inserted a first switch 33 placed within reach of the first hand of an operator holding the first and second lever 10, 11 in his/hers hand and thereby the miter saw 1. A second switch 34 is moreover inserted in the electric circuit and placed within reach of the other hand of the operator placing the rod 3 to be cut on the table 4 and clamping the rod to the guideway 5 during the cutting operation.

Both of the switches 33 and 34 are moreover placed in such distance from the saw blade that the operator is not able to reach the rotating saw blade with his/hers hands when activating the switches with said hands.

The electric circuit is adapted in such way that the current to the motor is switched on only when both of the switches are activated and switched off when at least one of the switches is deactivated.

The above-mentioned measure of precaution secures effectively the operator against getting his/hers hands injured when using the miter saw.

The saw blade will however continue to rotate some time after finishing a cutting operation when using a traditional electric motor even if the current to the motor has been switched off. The miter saw therefore still can be dangerous for the operator.

For eliminating this remaining risk for the operator the miter saw preferably uses a brake motor whereby the rotation of the saw blade comes to a standstill as soon as only one of the switches is deactivated.

Above is described and on the drawing shown one embodiment of the miter saw according to the invention.

Deciding is, according to the invention, that the miter saw is constructed and functions somewhat like a tong with a bearing upon which is arranged, two levers for operating the miter saw with a hand of an operator, a saw blade for cutting and severing rods into pieces and a table for supporting the rods during the operation.

## Claims

1. A hand-held miter saw with an electrically powered circular saw blade (2) for in use cutting a rod (3), said saw comprises a table (4) for supporting the rod (3) and a guideway (5) equipped on the table (4) for aligning the rod (3) into a desired miter angle, **characterized in that** the miter saw (1) comprises,
- a bearing (6) with an axis (7) extending parallel with the table (4) and consisting of a piece of tube (8) and a piece of axle (9) pivotally mounted in the tube (8),
- a first lever (10) connected to the tube (8) of the bearing (6) and a second lever (11) connected to the axle of the bearing (6) to serve like the levers of a tong to operate the miter saw by means of a hand of an operator,
- a cutting head (12) for supporting the spindle (13) of the circular saw blade (2) in such way that the axis of rotation (14) of said spindle (13) is parallel with the axis of the bearing (6),
- an arm (15) which is formed on the cutting head (12) and attached to the axle of the bearing (6) or pivotally connected to the first lever (10), and
- a bar (16), which is attached to the tube (8) of the bearing (6) or to the first lever (10) and is supporting the table (4) in such way that the table (4) can turn about a pivot axle (17) of the table (4) and the guideway forms an angle with the axis (14) of rotation of the saw blade (2).

2. A hand-held miter saw according to claim 1, **characterized in that** the first and second lever (10, 11) is forming such an angle with each other that both of them simultaneously could be hold by one hand.

3. A hand-held miter saw according to claim 1 or 2, **characterized in that** the table (4) with the guideway (5) is supported in such way on the bar (16) that the table (4) is allowed to be turned an angle between minus 75° and plus 75°, more preferably between minus 45° and plus 45°, or most preferably between minus 60° and plus 60°, around a pivot axle (17) of the table (4).

4. A hand-held miter saw according to claim 1, 2 or 3, **characterized in that** the pivot axle (17) of the table (4) is placed at a distance from the axis of the circular saw blade (2) larger than the radius of the saw blade (2) being in cutting position.

5. A hand-held miter saw according to any of the claims 1 - 4, **characterized in that** the table (4) is formed with a V-formed notch (24).

6. A hand-held miter saw according to any of the claims 1 - 5, **characterized in that** the guideway comprises two upright pieces of plate placed on the table (4) at each their side of the V-formed notch (24) in such way that they extend parallel with the axis (9) of the bearing (6) in the zero position of the table (4).

7. A hand-held miter saw according to any of the claims claim 1 - 6, **characterized in that** the interior angle between the guideway (5) and the table (4) faces towards the free end of the bar (16).

8. A hand-held miter saw according to any of the claims claim 1 - 7, **characterized in that** the guideway (5) is located between the axis of rotation (14) of the spindle (13) and the axis (7) of the bearing (6).

9. A hand-held miter saw according to any of the claims 1 - 8, **characterized in that** an elongated slit (25) is formed in the bar (16) in the area below the circular saw blade (2).

10. A hand-held miter saw according to any of the claims 1 - 9, **characterized in that** the miter saw (1) comprises a lower safety guard (26) placed on the underside of the bar (16) close to at least one of the edges of the slit (25).

11. A hand-held miter saw according to any of the claims 1 - 10, **characterized in that** the miter saw (1) comprises an upper safety guard (27) placed on the cutting head (12) close to at least one side of the circular saw blade (2).

12. A hand-held miter saw according to any of the claims 1 - 11, **characterized in that** the first lever (10) is equipped with a protruding arm (18) and that the arm (15) of the cutting head (12) is connected to the protruding arm (18) with a first pivot (19), and that the first toggle lever (20) of a toggle joint (21) simultaneously is connected to the arm (15) of the cutting head (12) with a second pivot (22) placed closer to the cutting head (12) than the first pivot (19) while the second toggle lever (23) of the toggle joint (21) is connected to the axle (9) of the bearing (6).

13. A hand-held miter saw according to any of the claims 1 - 12, **characterized in that** an electric motor (28) for rotating the circular saw blade (2) is mounted on the cutting head (12) with its axis of rotation placed parallel with and at a distance from the spindle (13) of the circular saw blade (2).

14. A hand-held miter saw according to claim 13, **characterized in that** the electrical motor is a brake motor.

15. A hand-held miter saw according to any of the claims 1 - 14, **characterized in that** the electric motor (28) is rotating the circular saw blade (2) via a toothed gearing (29,30,31).

16. A hand-held miter saw according to any of the claims 1 - 15, **characterized in that** an electric battery (32), which is placed on the second lever (11) is supplying the electric motor (28) with current via an' electric circuit.

17. A hand-held miter saw according to any of the claims 1 - 16, **characterized in that** a first switch (33), which is inserted in the electric circuit, is placed within reach of the first hand of an operator holding the first and second lever (11) and thereby the miter saw (1) in his/hers hand and that a second switch (34), which is inserted in the electric circuit too, is placed within reach of the other of the hands of the operator placing the rod (3) to be cut on the table (4) along the guideway (5), whereby the motor (28) is supplied with current when both switches (33, 34) are switched on and said supply is stopped when switching off at least one of the switches.

18. A hand-held miter saw according to claim 17, **characterized in that** both of the switches (33, 34) are placed at such distance from the saw blade (2) that the hands of the operator is outside the reach of the saw blade (2) when they are switching the switches (33, 34) on or off.

19. A use of the hand-held miter saw (1) according to any of the claims 1 - 18, **characterized in** carrying on the following steps,
- adjusting the table (4) into the desired miter angle,
- holding with one of the hands of an operator the first lever (10) and the second lever (11),
- transporting the miter saw (1) to the place where a rod (3) to be cut is located,
- placing with the other hand the rod (3) along the guideway (5) on the table (4),
- activating the first switch (33) with the first hand and the second switch (34) with the other hand,
- clamping the first and second lever (11) against each other by closing the first hand in a tempo corresponding to the tempo in which the cutting of the rod (3) is to be carried out,
- deactivating at least one of the switches (33, 34),
- opening the first hand, and
- removing with the other hand at least one of the severed two pieces of rod (3).

## Patentansprüche

1. Hand-Gehrungssäge mit einem elektrisch angetriebenen Kreissägeblatt (2) zum Schneiden eines Stabs (3), wobei die Säge einen Tisch (4) zum Stützen der Stange (3) aufweist und eine Führung (5) auf dem Tisch (4) eingerichtet ist zum Ausrichten des Stabs (3) in einem gewünschten Gehrungswinkel,
**dadurch gekennzeichnet, dass**
die Gehrungssäge (1) aufweist:
- ein Lager (6) mit einer Achse (7), die sich parallel zum Tisch (4) erstreckt und aus einem Stück Rohr (8) und einem im Rohr schwenkbar gelagerten Stück Achse (9) besteht,
- einen ersten Hebel (10), der mit dem Rohr (8) des Lagers (6) befestigt ist, und einem zweiten Hebel (11), der mit der Achse des Lagers (6) befestigt ist, um wie die Hebel einer Zange zu wirken, um die Gehrungssäge durch die Hand eines Benutzers zu bedienen,
- einen Schneidkopf (12) zum Lagern der Spindel (13) des Kreissägeblattes (2) derart, dass die Drehachse (14) der Spindel (13) mit der Achse des Lagers (6) parallel ist,
- einen Arm (15), der am Schneidkopf (12) gebildet ist und an der Achse des Lagers (6) befestigt oder schwenkbar mit dem ersten Hebel (10) verbunden ist, und
- eine Stange (16), die am Rohr (8) des Lagers (6) oder am ersten Hebel (10) befestigt ist und den Tisch (4) derart unterstützt, dass der Tisch (4) um eine Schwenkachse (17) des Tisches (4) drehen kann und die Führung einen Winkel mit der Rotationsachse (14) des Sägeblatts (2) bildet.

2. Hand-Gehrungssäge nach Anspruch 1, **dadurch gekennzeichnet, dass** der erste und zweite Hebel (10, 11) derart miteinander einen Winkel bilden, dass beide gleichzeitig von einer Hand gehalten werden können.

3. Hand-Gehrungssäge nach Anspruch 1 oder 2, **dadurch gekennzeichnet, dass** sich der Tisch (4) mit der Führung (5) derart auf dem Balken (16) abstützt, dass es dem Tisch (4) ermöglicht ist, um einen Winkel zwischen minus 75° und plus 75°, bevorzugt zwischen minus 45° und plus 45°, oder höchst bevorzugt zwischen minus 60° und plus 60°, um eine Schwenkachse (17) des Tisches (4) gedreht zu werden.

4. Hand-Gehrungssäge nach Anspruch 1, 2 oder 3, **dadurch gekennzeichnet, dass** die Schwenkachse (17) des Tisches (4) mit einem Abstand von der Achse des Kreissägeblattes (2) angeordnet ist, der größer als der Radius des Sägeblatts (2) in Schneidposition ist.

5. Hand-Gehrungssäge nach einem der Ansprüche 1 - 4, **dadurch gekennzeichnet, dass** der Tisch (4) mit einer V-förmigen Kerbe (24) ausgebildet ist.

6. Hand-Gehrungssäge nach einem der Ansprüche 1 - 5, **dadurch gekennzeichnet, dass** die Führung zwei aufrechte Teile einer Platte aufweist, die auf dem Tisch (4) an jeder Seite der V-förmige Kerbe (24) in solcher Weise angeordnet ist, dass diese sich parallel zur Achse (9) des Lagers (6) in der Nullstellung des Tisches (4) erstrecken.

7. Hand-Gehrungssäge nach einem der Ansprüche 1 - 6, **dadurch gekennzeichnet, dass** der Innenwinkel zwischen der Führung (5) und dem Tisch (4) dem freien Ende des Balkens (16) zugewandt ist.

8. Hand-Gehrungssäge nach einem der Ansprüche 1 - 7, **dadurch gekennzeichnet, dass** die Führung (5) zwischen der Drehachse (14) der Spindel (13) und der Achse (7) des Lagers (6) angeordnet ist.

9. Hand-Gehrungssäge nach einem der Ansprüche 1 - 8, **dadurch gekennzeichnet, dass** ein langgestreckter Schlitz (25) in dem Balken (16) im Bereich unterhalb des Kreissägeblattes (2) gebildet ist.

10. Hand-Gehrungssäge nach einem der Ansprüche 1 - 9, **dadurch gekennzeichnet, dass** die Gehrungssäge (1) einen unteren Schutz (26) aufweist, der an der Unterseite des Balkens (16) in der Nähe mindestens eines der Ränder des Schlitzes (25) angeordnet ist.

11. Hand-Gehrungssäge nach einem der Ansprüche 1 - 10, **dadurch gekennzeichnet, dass** die Gehrungssäge (1) einen oberen Schutz (27) aufweist, der am Schneidkopf (12) in der Nähe mindestens einer Seite des kreisförmigen Sägeblatts (2) angeordnet ist.

12. Hand-Gehrungssäge nach einem der Ansprüche 1 - 11, **dadurch gekennzeichnet, dass** der erste Hebel (10) mit einem vorspringenden Arm (18) ausgestattet ist und dass der Arm (15) des Schneidkopfes (12) mit dem vorstehenden Arm (18) verbunden ist mit einem ersten Drehpunkt (19), und dass der erste Kniehebel (20) eines Kniegelenks (21) gleichzeitig mit dem Arm (15) des Schneidkopfes (12) mit einem zweiten Drehpunkt (22) verbunden ist, der näher an dem Schneidkopf (12) als der erste Drehpunkt (19) angeordnet ist, wobei der zweite Kniehebel (23) des Kniegelenks (21) mit der Achse (9) des Lagers (6) verbunden ist.

13. Hand-Gehrungssäge nach einem der Ansprüche 1 - 12, **dadurch gekennzeichnet, dass** ein Elektromotor (28) zum Drehen des Kreissägeblatts (2) am Schneidkopf (12) montiert ist mit dessen Drehachse parallel mit und in einem Abstand von der Spindel (13) des Kreissägeblattes (2) angeordnet.

14. Hand-Gehrungssäge nach Anspruch 13, **dadurch gekennzeichnet, dass** der elektrische Motor ein Bremsmotor.

15. Hand-Gehrungssäge nach einem der Ansprüche 1 - 14, **dadurch gekennzeichnet, dass** der Elektromotor (28) das Kreissägeblatt (2) über ein Zahnradgetriebe (29, 30, 31) dreht.

16. Hand-Gehrungssäge nach einem der Ansprüche 1 - 13, **dadurch gekennzeichnet, dass** eine elektrische Batterie (32), die am zweiten Hebel (11) angeordnet ist, den Elektromotor (28) über eine elektrische Schaltung mit Strom versorgt.

17. Hand-Gehrungssäge nach einem der Ansprüche 1 - 16, **dadurch gekennzeichnet, dass** ein erster Schalter (33), der in den Stromkreis eingefügt ist, in Reichweite der ersten Hand eines Benutzers angeordnet ist, die den ersten und den zweiten Hebel (11) und damit die Gehrungssäge (1) in seiner/ihrer Hand hält, und dass ein zweiter Schalter (34), der auch in der elektrischen Schaltung eingefügt ist, in Reichweite der anderen Hand des Benutzers angeordnet ist, die die Stange (3), die auf dem Tisch (4) entlang der Führung (5) geschnitten werden soll, anordnet, wobei der Motor (28) mit Strom versorgt wird, wenn beide Schalter (33, 34) eingeschaltet sind und die Versorgung gestoppt wird, wenn wenigstens einer der Schalter ausgeschaltet wird.

18. Hand-Gehrungssäge nach Anspruch 17, **dadurch gekennzeichnet, dass** beide Schalter (33, 34) in einem solchen Abstand von dem Sägeblatt (2) angeordnet, dass sich die Hände des Benutzers außerhalb der Reichweite des Sägeblatts (2) befinden, wenn sie die Schalter (33, 34) ein- oder ausschalten.

19. Verwendung der Hand-Gehrungssäge (1) nach einem der Ansprüche 1 - 18, **gekennzeichnet durch** Ausführen der folgenden Schritte:
- Einstellen des Tischs (4) auf den gewünschten Gehrungswinkel,
- Halten des ersten Hebels (10) und des zweiten Hebels (11) mit einer der Hände eines Benutzers,
- Transportieren der Gehrungssäge (1) an den Ort, an dem eine zu schneidende Stange (3) angeordnet ist,
- Anordnen der Stange (3) mit der anderen Hand entlang der Führung (5) auf dem Tisch (4),
- Aktivieren des ersten Schalters (33) mit der ersten Hand und des zweiten Schalters (34) mit der anderen Hand,
- Klemmen der ersten und des zweiten Hebels (11) gegeneinander **durch** Schließen der ersten Hand in einem Tempo, das dem Tempo entspricht, mit dem das Schneiden der Stange (3) durchgeführt werden soll,
- Deaktivieren wenigstens einer der Schalter (33, 34),
- Öffnen der ersten Hand, und
- Entfernen von wenigstens einem der getrennten zwei Teile der Stange (3) mit der anderen Hand.

## Revendications

1. Scie à onglet tenue en main comprenant une lame de scie circulaire (2) alimentée en électricité pour son utilisation dans la découpe d'une tige (3), ladite scie comprenant une table (4) pour supporter la tige (3) et une glissière (5) dont est équipée la table (4) pour disposer la tige (3) en alignement avec un angle d'onglet désiré, **caractérisée en ce que** la scie à onglet (1) comprend :
- un palier (6) dont l'axe (7) s'étend parallèlement à la table (4) et qui est constitué par un élément en forme de tube (8) et par un élément faisant office d'essieu (9) monté en pivotement dans le tube (8) ;
- un premier levier (10) relié au tube (8) du palier (6) et un second levier (11) relié à l'essieu du palier (6) pour agir à la manière des leviers d'une pince pour actionner la scie à onglet à l'aide d'une main d'un opérateur ;
- une tête de coupe (12) pour supporter l'arbre (13) de la lame de scie circulaire (2) d'une manière telle que l'axe de rotation (14) dudit arbre (13) soit parallèle à l'axe du palier (6) ;
- un bras (15) qui est formé sur la tête de coupe (12) et qui est fixé à l'essieu du palier (6) ou relié en pivotement au premier levier (10) ; et
- une barre (16) qui est fixée au tube (8) du palier (6) ou au premier levier (10) et qui supporte la table (4) d'une manière telle que la table (4) peut effectuer des rotations autour d'un essieu de pivotement (17) de la table (4) et que la glissière forme un angle avec l'axe (14) de rotation de la lame de scie (2).

2. Scie à onglet tenue en main selon la revendication 1, **caractérisée en ce que** le premier et le second levier (10, 11) sont réalisés en formant un angle l'un par rapport à l'autre, tel qu'ils peuvent tous les deux être tenus simultanément par une seule main.

3. Scie à onglet tenue en main selon la revendication 1 ou 2, **caractérisée en ce que** la table (4) comprenant la glissière (5) est supportée sur la barre (16) d'une manière telle que la table (4) peut effectuer une rotation en formant un angle entre moins 75° et plus 75°, de manière plus préférée entre moins 45° et plus 45°, ou de manière de loin préférée entre moins 60° et plus 60° autour d'un essieu de pivotement (17) de la table (4).

4. Scie à onglet tenue en main selon la revendication 1, 2 ou 3, **caractérisée en ce que** l'essieu de pivotement (17) de la table (4) est placé à une distance, par rapport à l'axe de la lame de scie circulaire (2), supérieure au rayon de la lame de scie (2) dans sa position de découpe.

5. Scie à onglet tenue en main selon l'une quelconque des revendications 1 à 4, **caractérisée en ce qu'**une encoche (24) en forme de V est formée dans la table (4).

6. Scie à onglet tenue en main selon l'une quelconque des revendications 1 à 5, **caractérisée en ce que** la glissière comprend deux éléments dressés en forme de plaque placés sur la table (4) de chaque côté de l'encoche (24) en forme de V, d'une manière telle qu'il s'étendent parallèlement à l'axe (9) du palier (6) dans la position zéro de la table (4).

7. Scie à onglet tenue en main selon l'une quelconque des revendications 1 à 6, **caractérisée en ce que** l'ongle interne formé entre la glissière (5) et la table (4) est orienté en direction de l'extrémité libre de la barre (16).

8. Scie à onglet tenue en main selon l'une quelconque des revendications 1 à 7, **caractérisée en ce que** la glissière (5) est située entre l'axe de rotation (14) de l'arbre (13) et l'axe (7) du palier (6).

9. Scie à onglet tenue en main selon l'une quelconque des revendications 1 à 8, **caractérisée en ce qu'**une fente allongée (25) est formée dans la barre (16) dans la zone située en dessous de la lame de scie circulaire (2).

10. Scie à onglet tenue en main selon l'une quelconque des revendications 1 à 9, **caractérisée en ce que** la scie à onglet (1) comprend un dispositif de sécurité inférieur (26) placé sur le côté inférieur de la barre (16) à proximité d'au moins un des bords de la fente (25).

11. Scie à onglet tenue en main selon l'une quelconque des revendications 1 à 10, **caractérisée en ce que** la scie à onglet (1) comprend un dispositif de sécurité supérieur (27) placé sur la tête de coupe (12) à proximité d'au moins un côté de la lame de scie circulaire (2).

12. Scie à onglet tenue en main selon l'une quelconque des revendications 1 à 11, **caractérisée en ce que** le premier levier (10) est équipé d'un bras faisant saillie (18) et **en ce que** le bras (15) de la tête de coupe (12) est relié au bras faisant saillie (18) avec un premier pivot (19), et **en ce que** le premier levier à genouillère (20) d'une genouillère (21) est relié de manière simultanée au bras (15) de la tête de coupe (12) avec un second pivot (22) placé plus près de la tête de coupe (12) que le premier pivot (19), tandis que le second levier à genouillère (23) de la genouillère (21) est relié à l'essieu (9) du palier (6).

13. Scie à onglet tenue en main selon l'une quelconque des revendications 1 à 12, **caractérisée en ce qu'**un moteur électrique (28) pour la mise en rotation de la lame de scie circulaire (2) est monté sur la tête de coupe (12) avec son axe de rotation disposé parallèlement à l'arbre (13) de la lame de scie circulaire (2) et à une certaine distance de l'arbre en question.

14. Scie à onglet tenue en main selon la revendication 13, **caractérisée en ce que** le moteur électrique est un moteur frein.

15. Scie à onglet tenue en main selon l'une quelconque des revendications 1 à 14, **caractérisée en ce que** le moteur électrique (28) met la lame de scie circulaire (2) en rotation via un engrenage denté (29, 30, 31).

16. Scie à onglet tenue en main selon l'une quelconque des revendications 1 à 15, **caractérisée en ce qu'**une pile électrique (30) qui est placée sur le second levier (11) alimente le moteur électrique (28) avec du courant via un circuit électrique.

17. Scie à onglet tenue en main selon l'une quelconque des revendications 1 à 16, **caractérisée en ce qu'**un premier interrupteur (33) qui est inséré dans le circuit électrique est placé à portée de la première main d'un opérateur qui maintient le premier et le second levier (11) et par conséquent la scie à onglet (1) dans sa main et **en ce qu'**un second interrupteur (34) qui est inséré également dans le circuit électrique est placé à portée de l'autre main de l'opérateur plaçant la tige (3) à découper sur la table (4) le long de la glissière (5), le moteur (28) étant alimenté avec du courant lorsque les deux interrupteurs (33, 34) sont mis en circuit et ladite alimentation étant interrompue lorsqu'au moins un des interrupteurs est mis hors circuit.

18. Scie à onglet tenue en main selon la revendication 17, **caractérisée en ce que** les deux interrupteurs (33, 34) sont placés, à une distance par rapport à la lame de scie (2), telle que les mains de l'opérateur sont hors d'atteinte de la lame de scie (2) lorsqu'elles procèdent à la mise en ou hors circuit des interrupteurs (33, 34).

19. Utilisation de la scie à onglet tenu en main (1) selon l'une quelconque des revendications 1 à 18, **caractérisée par** le fait de passer par les étapes suivantes dans lesquelles :
- on règle la table (4) pour obtenir l'ongle d'onglet désiré ;
- un opérateur maintient à l'aide d'une main le premier levier (10) et le second levier (11) ;
- on transporte la scie à onglet (1) à l'endroit où se trouve une tige (3) qui doit être découpée ;
- on place, à l'aide de l'autre main, la tige (3) le long de la glissière (5) sur la table (4) ;
- à l'aide de la première main, on active le premier interrupteur (33) et avec l'autre main le second interrupteur (34) ;
- on serre les premier et second leviers (11) l'un contre l'autre en fermant la première main à un rythme qui correspond au rythme par lequel la découpe de la tige (3) doit être réalisée ;
- on désactive au moins un des interrupteurs (33, 34) ;
- on ouvre la première main ; et
- on retire à l'aide de l'autre main au moins un des deux morceaux coupés de la tige (3).
